# EUROPEAN PATENT APPLICATION

(11) **EP 2 256 939 A2**
(43) Date of publication of application: **01.12.2010**
(21) Application number: 09721226.0
(22) Date of filing: 19.03.2009
(51) Int. Cl.: H04B 1/38

(54) **MULTI-DIRECTIONAL SLIDE INPUT DEVICE FOR A PORTABLE TERMINAL**

(30) Priority: 19.03.2008 KR 20080025371
(71) Applicant: Zacod Co., Ltd, Seoul 136-791 (KR)
(72) Inventor: JO, Won-Hyung, Seoul 139-243 (KR)
(74) Representative: Dr. Weitzel & Partner
(86) International application number: PCT/KR2009/001396
(87) International publication number: WO 2009/116812

(57) **Abstract**

The invention relates to a multi-directional slide input device for a portable terminal, which comprises: a base, which is mounted on the terminal and includes a rectangular-shaped operation surface and a wall formed along the frame of the operation surface, the wall having at least four stationary contact points therein; an X-axis moving stage, which is provided with an X-axis sliding portion formed in a protruding manner on the upper and lower sides of the wall to move in the horizontal direction while being seated on the operation surface, and with a Y-axis moving guide formed in a protruding manner inside the wall on both lateral sides thereof; a Y-axis moving stages, which has an installation surface to install at least one key input means thereon, the installation surface having a wall formed along the frame thereof, and is provided with a Y-axis sliding portion to be coupled with the Y-axis moving guide so as to move vertically within an opening and with an actuation operating portion arranged, on the outside of the wall, at a distance, the actuation operating portion having a multiplicity of actuation contact points coupled to the key input means; and a circuit board, which is mounted on the installation surface of the Y-axis moving stages and has a keypad contact point. It is an advantage of the invention that various electric actions are executed by the operation of the stationary and moving contact points through the sliding motion from the central point of the Y-axis moving stages towards a target direction and the return motion towards the central point, and by the operation of the key input means.

## Description

### [Technical Field]

The present invention relates to a multi-directional input device used in game machines, mobile phones, etc. More particularly, the present invention relates to a multi-directional slide input device for a portable terminal, which enables a predetermined signal input through a slide operation.

### [Background Art]

There are provided several kinds of slide input devices configured to execute a switch operation, a mode switch operation, and other electrical operations by executing the contact and separation operations of contact points in such a way as to slide and move a slider, equipped with moving contact points, for stationary contact points included in a base, a casing, etc. mounted on a terminal.

However, in the existing slide input devices, a switch having a slider configured to slide and move in the four directions of the upper, lower, left, and right directions requires a large number of components. In particular, in line with a tendency that the size of an input device of this kind is greatly reduced (e.g., the input device is about 15 mm in length and width and 3 to 5 mm in thickness), a lot of efforts are required in the assembly task of the switch and the assembly cost is increased that much. Furthermore, there is a problem in that performance of a high accuracy is not uniform.

In particular, the size of the switch has been greatly reduced. Thus, in most cases, there is provided only means for sliding and moving a slider in the four directions of the X-axis and Y-axis directions (i.e., upper and lower directions) and left and right directions because of a limitation to the space, etc.

Furthermore, in an input device configured to provide means for sliding a slider in the eight directions (i.e., the upper and lower, left and right, and diagonal directions), a system must be configured to perform detection in a specific direction using a method of combining two or more contact and non-contact operations for each direction, not a method of the eight directions being independently touched or separated. Consequently, there is a high possibility of miss typing and error in an input signal.

For example, Korean Patent Registration No. 0584428 (hereinafter referred to as a 'first conventional patent') proposes a slide switch configured to perform a slide operation in the X-axis and Y-axis directions.

The above slide switch has a structure for one switch. Thus, in order to operate characters, numerals, and various functions of a portable terminal, the number of buttons must be increased. However, in the case of the first conventional patent, if the number of buttons is one or more, a left or right tilting phenomenon is generated, or the above-described problem must be solved in order to apply the slide switch to portable terminals because a structure for supporting the increased key buttons must be added.

Furthermore, in the case of the first conventional patent, the sliding structure for performing the sliding operation in the X-axis and Y-axis directions has a triple structure (i.e., a slider + a sliding tip + a base guide groove), and a switch for vertical operation has a stack structure in which the switch is coupled to the top surface of the sliding structure. Accordingly, the triple structure becomes an obstacle to a reduction in the thickness, and thus the first conventional patent is not suitable to be applied to portable terminals having a lost of a limitation to the thickness.

Furthermore, the sliding structure has a four-layer stack structure, including a keypad, and thus generates a tilting phenomenon for a slide direction because of its height. Accordingly, such a structure serves as a factor to generate a problem in the mechanical durability when it is applied to portable terminals that must be operated tens of thousands of times. Accordingly, there is a need for an improved slide apparatus having a thinner thickness for preventing the tilting phenomenon.

Meanwhile, in order to perform the characters, numerals, and various functions in addition to the telephone function, a user has to operate the keypad of the portable terminal using his finger. Providing the means that can slide with high accuracy in four or more multiple directions, that is, 6, 8, 12, or 16 directions (i.e., the main object of the first conventional patent) is not suitable for the purpose of portable terminals. This is because in common users, portable terminals can be sufficiently used through 4 to 8 sliding operations. It is very difficult to accurately distinguish the 12 directions or the 16 directions using a finger and, rather, this method is inefficient.

An input device using the 12 to 16 directions has a problem in that the ratio of miss typing rises when characters and numerals are inputted.

Another conventional technique, that is, Korean Patent Registration Patent 0749117 (hereinafter referred to as a 'second conventional patent') does not have an additional guide for accurate sliding, but has only resilient means for position restoration and it can be limitedly applied to a Joystick function using one key in a portable terminal.

Furthermore, regarding the contact and separation method of the contact points, in the first and second conventional patents, the stationary contact points on the base are formed in parallel to a sliding direction, and the width thereof must be appropriate with consideration taken of the motion of the moving contact points and the accuracy of signal input. Thus, there is a disadvantage in that the size of the length and width of a portable terminal is increased because a sliding stroke for the signal input is inevitably lengthened. Furthermore, in order to output a signal of a predetermined direction, two or more of the stationary contact points must be touched and separated at the same time. Thus, in order to develop a program for performing a function of a special purpose, a very complicated and troublesome process must be performed because of its assembly process. Accordingly, there is a problem in that the processing speed of an input signal is relatively slow because a signal of combined stationary contact points has to be processed.

A third conventional technique, that is, Korean Patent Registration 0477775 (hereinafter referred to as a 'third conventional patent') adopts a method of independently operating the eight directions, but it is disadvantageous in that the radius is very wide when the longitude is operated and the height and the size are not suitable to be applied to portable terminals. Furthermore, there is a burden the assembly and the product cost because a large number of components are required. Furthermore, the third conventional patent does not at all have a structure capable of including a plurality of keypads.

### [Disclosure]

### [Technical Problem]

Accordingly, the present invention has been made in view of the above problems occurring in the prior art. According to the present invention, the thickness of a terminal can be minimized by disposing a base for 8-direciton slides and guides for the X-axis and Y-axis directions on the same plane so that there is no difference in the vertical phase displacement, four or more directions can be independently touched and separated, and a slide distance can be minimized.

### [Technical Solution]

To achieve the above objects, the present invention provides a portable terminal equipped with key input means for operating characters, numerals, and various functions, comprising a base mounted on the terminal and configured to comprise a rectangular operation surface, wherein a wall is formed along a frame of the operation surface and four or more stationary contact points are formed on an inside of the wall; an X-axis moving stage seated on the operation surface and configured to have X-axis sliding portions protruded on upper and lower sides of the wall so that the X-axis moving stage moves in a horizontal direction and to have Y-axis moving guides protruded on an inside of the wall on left and right sides of the wall; Y-axis moving stages, each configured to have a landing surface on which at least one key input means is seated, Y-axis sliding portions coupled with the respective Y-axis moving guides and formed on walls formed along a frame of the landing surface so that the Y-axis moving stage vertically moves within a space, and actuation operating portions spaced apart one another on outsides of the walls, wherein the actuation operating portions having a plurality of actuation contact points coupled to the key input means; and a circuit board mounted on the landing surface of the Y-axis moving stage and configured to comprise keypad contact points.

### [Advantageous Effects]

The multi-directional slide input device constructed as above according to the present invention has the following advantages.

First, couplings for the slides of the base, and the X-axis moving stage and the Y-axis moving stages are placed on the same plane so that there is not different in the vertical phase displacement. The stationary contact points of the base and the moving contact points of the actuation operating portions can be independently operated by the internal structure of an octagonal base and the structures of the actuation operating portions and the ring having an angle and length of a specific condition,. Accordingly, the multi-directional slide input device of the present invention complies with a consumer's purchase propensity because a sliding stroke can be minimized and a slide input device can also be made slim.

Second, since the stationary contact points and the moving contact points of four or more directions are independently operated, the accuracy of an input signal, required by a user, rises.

Third, keys can slide very lightly and smoothly without abnormality, tilting, and distortion in a rotating direction when they slide in a target direction, irrespective of the number of keys, by solving the problem that the existing slide input device is not suitable to slide two or more keys. Accordingly, mechanical reliability is increased and improved durability can be expected.

Fourth, a keypad equipped with at least one button for executing several electrical operations in order to make further slim the entire thickness and size and to simply perform characters, numerals, and various functions can slide in four or more directions within the base on the basis of its center.

### [Description of Drawings]

FIG. 1 is a perspective view of a portable terminal equipped with a multi-directional slide input device according to an embodiment of the present invention;
FIG. 2 is an exploded perspective view of the multi-directional slide input device according to the embodiment of the present invention;
FIG. 3 is a perspective view of a state in which the components of the multi-directional slide input device according to the embodiment of the present invention are combined together;
FIG. 4 is a diagram showing the operation of FIG. 3 and is a plan view of a state in which the center of a base coincides with the center point of a Y-axis moving stage;
FIG. 5 is a diagram showing the operation of FIG. 3 and is a plan view showing a state in which the Y-axis moving stage has moved in the upper left direction from the state of FIG. 4;
FIG. 6 is an explanatory diagram showing the operation of FIG. 3 and is a plan view showing a state in which the Y-axis moving stage has moved in the left direction from the state of FIG. 4;
FIGS. 7 and 8 are a perspective view and a rear view of the base according to FIG. 2;
FIG. 9 is a perspective view of the entire wiring structure according to FIG. 2;
FIG. 10 is a perspective view of an X-axis moving stage according to FIG. 2;
FIG. 11 is a perspective view of the Y-axis moving stage according to FIG. 2;
FIG. 12 is a perspective view of a ring according to FIG. 2;
FIGS. 13 and 14 are diagrams showing patterns of a keypad contact point and a moving contact point according to FIG. 2;
FIGS. 15 and 16 are cross-sectional views of the multi-directional slide input device according to the present embodiment; and
FIGS. 17 to 20 are perspective views of various terminals to which the multi-directional slide input device K according to the present embodiment is applied.

### <Description of reference numerals of principal elements in the drawings>

| | |
|---|---|
| 100: base | 110: bottom surface |
| 120: space | 130: wall |
| 131: contact point-fixing piece | 210: space |
| 132: stationary contact point | 220, 310; wall |
| 133: stationary contact point terminal | |
| 400: circuit board | 140: X-axis moving guide |
| 134: wiring reception groove | 200: X-axis moving stage |
| 230: Y-axis moving guide | 350: wiring exit |
| 240: X-axis sliding portion | 300: Y-axis moving stage |
| 320: X-axis sliding portion | 340: driving portion |
| 330: actuation operating portion | 500: ring |
| 420: moving contact point | 410: keypad contact point |
| 430: flexible circuit board | 520: outside protrusion |
| 510: chamfer portions | 600: keypad |
| 530: inside protrusion | 610: key |

### [Mode for Invention]

Hereinafter, a multi-directional slide input device according to an embodiment of the present invention is described with reference to the accompanying drawings.

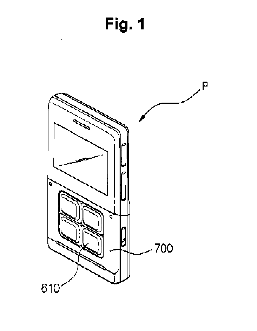

FIG. 1 is a diagram showing a state in which the multi-directional slide input device according to the embodiment of the present invention is installed in a common mobile phone from among portable terminal equipped with.

Referring to the drawing, the multi-directional slide input device K of the present embodiment is fixed and coupled to the main body of a portable terminal P and configured to move in a sliding manner in the X-axis and Y-axis directions in order to the enter of keys for operating characters, numerals, and various functions of the portable terminal P.

Here, four or more stationary contact points 132 and four or more moving contact points 420 are configured to be independently operated by the internal structure of a base 100 of an octagon and the structures of actuation operating portions 330 and a ring 500. They are described in detail later.

Meanwhile, in the present embodiment, although the common mobile phone P from among portable terminals is described and shown as an example, the multi-directional slide input device K of the present embodiment can be applied to a variety of articles, such as electronic dictionary, a notebook, a PMP, and a remote controller, in addition to the mobile phone.

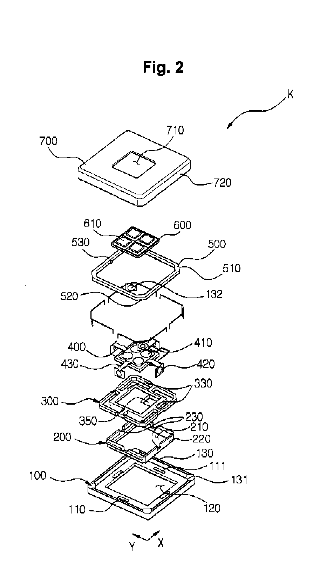

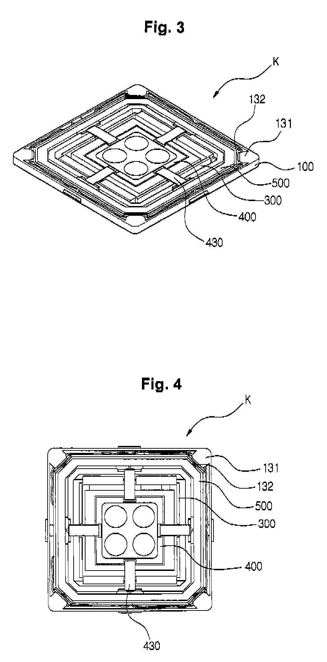

The multi-directional slide input device K according to the present embodiment is shown in detail in FIGS. 2 and 3.

Referring to the drawings, the multi-directional slide input device K includes the base 100 fixed to the terminal body P (here, the terminal body is used as the same meaning as a base cover 700 shown in FIG. 2), an X-axis moving stage 200 coupled to the base 100 and configured to move in the horizontal direction in the drawing, Y-axis moving stages 300 coupled to the X-axis moving stage 200 and configured to move in the vertical direction, a circuit board 400 received in the Y-axis moving stages 300, and a keypad 600 configured to bring into contact with the circuit board thereon and fixed thereto.

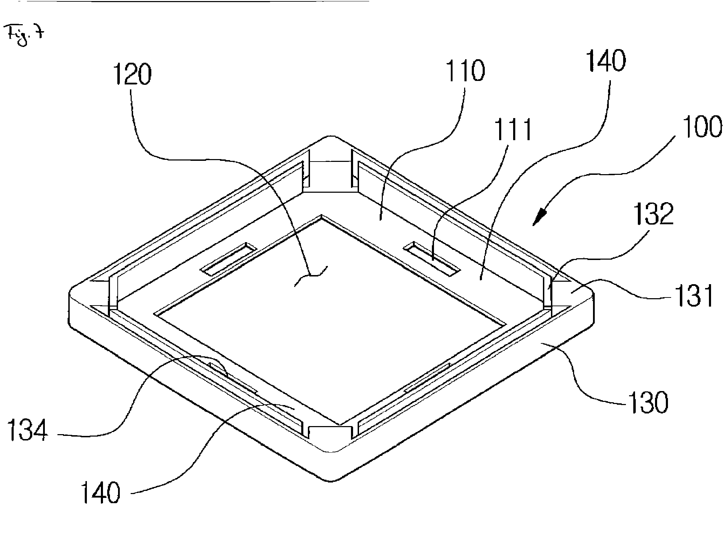

The base 100 includes a rectangular operation surface 110, as shown in FIGS. 2, 7, and 8. A space 120 of a rectangular shape is formed at the center of the operation surface 110. A wall 130 of an approximately rectangular shape is upwardly disposed in the vertical direction and configured to surround the frame of the operation surface 110. Here, contact point-fixing pieces 131 are inwardly formed in a protruding manner so that stationary contact points 132 are disposed in the respective inside corners of the wall 130. Accordingly, the inside surface of the wall 130 has an octagon.

The stationary contact points 132 are provided on the respective inside surfaces of the contact point-fixing pieces 131 of the wall 130. Stationary contact point terminals 133 are electrically coupled to the stationary contact points 132 on the rear of the base 100 and configured to transmit an input signal externally. Furthermore, a wiring reception groove 134 is depressed approximately at the center of the wall 130 so that it can accommodate wirings coupled to the stationary contact points 132.

The operation surface 110 formed in the four directions of the space 120 (i.e., between the space 120 and the wall 130 is provided to have a sufficiently wide width so that the ring 500 and the actuation operating portions 330 of the Y-axis moving stages 300 can freely slide. Here, two operation surfaces of the operation surface 110, arranged in parallel to each other in the horizontal direction, function as X-axis moving guides 140 configured to give guidance to the movement of the X-axis moving stage 200 in the X-axis direction.

In other words, both the X-axis moving guides 140 and a surface on which the ring 500 and the actuation operating portions 330 can slide are provided on the upper and lower sides of the operation surface 110, whereas only a surface on which the ring 500 and the actuation operating portions 330 can slide is provided on the right and left sides of the operation surface 110.

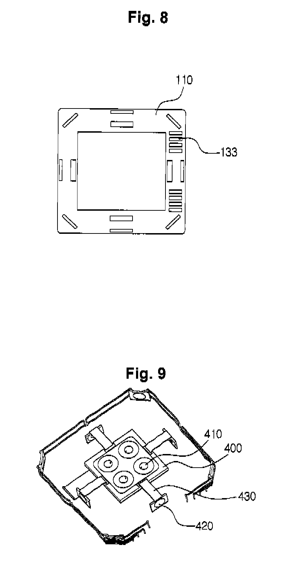

The X-axis moving stage 200, as shown in FIGS. 2 and 9, is configured to have a rectangular form and to slide on the base 100 in the X-axis direction. The space 210 of a rectangular shape is formed at the center of the X-axis moving stage 200, and the wall 220 is upwardly prolonged and formed in the frame on the upper, lower, left, and right sides around the center of the space 210.

In this case, the X-axis moving guides140 are seated on the wall disposed on the upper and lower sides, and thus X-axis sliding portions 240 are prolonged and disposed on the outside upper portions of the wall 220 so that the X-axis moving stage 200 can move in the X-axis direction.

Furthermore, Y-axis moving guides 230 are prolonged and formed in the Y-axis direction at the inside bottoms of the left and right walls 220 of the space 210 in order to give guidance to the Y-axie moving stages 300. In this case, the X-axis sliding portion 240 and the Y-axis moving guide 230, when viewed from the side, are configured to have a stepped shape ' 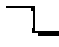 '.

That is, the X-axis moving stage 200 is coupled to the X-axis moving guide 140 within the space 120 of the base 100 in such a way as to be laid on the X-axis moving guides 140 in the form of ' 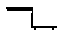 '. Accordingly, the X-axis moving stage 200 can slide in the horizontal direction with a minimum thickness.

Meanwhile, driving portion slots 221 through which the driving portions of four or more Y-axis moving stages 300 can move are configured to have approximately a rectangle and provided in the respective wall 220.

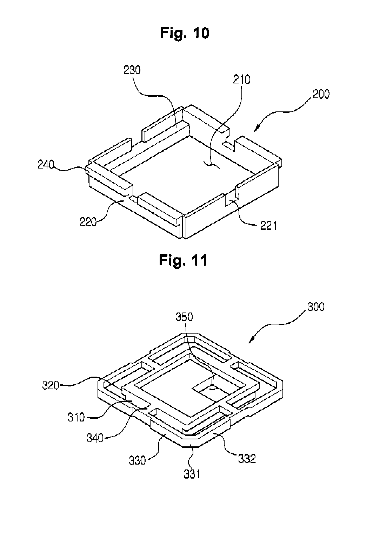

As shown in FIGS. 2 and 11, the Y-axis moving stage 300 is configured to have a bottom surface of the rectangle such that the circuit board 400 and the keypad 600 can be seated on the top surface of the Y-axis moving stage 300. Further, walls 310 of a rectangle, vertically prolonged and formed and configured to surround the frame, are provided on the edges of the bottom surface of the Y-axis moving stage 300. In this case, the wiring exit 350 of key input means, configured to accommodate one or more key input means (FIG. 9) and to have an approximate size, is formed in part of the bottom surface of the Y-axis moving stage 300.

Furthermore, a pair of Y-axis sliding portions 320 is externally prolonged and formed in parallel in the walls 310 on the left and right sides of the walls 310. The pair of Y-axis sliding portions 320 is seated on the Y-axis moving guides 230 of the X-axis moving stage 200 and moved in the vertical direction within the space 210.

The actuation operating portions 330 of a rectangular ring shape are disposed on the external portions of the walls 310 at specific intervals. The walls 310 and the actuation operating portions 330 are integrally coupled together by the driving portions 340. Accordingly, four spaces of a '┐' shape are formed between the walls 310 and the actuation operating portions 330 and partitioned by the driving portions 340.

In this case, the driving portions 340 of the Y-axis moving stages 300 are inserted into the respective driving portion slots 221 of the X-axis moving stage 200. The driving portion slots 221 are formed to prevent interference with the driving portions 340 according to the operation of the Y-axis moving stages 300.

Chamfer portions 331 are formed at the respective outside and inside corners of the actuation operating portions 330 and configured to correspond to the shapes of the contact point-fixing pieces 131 of the base 100. The actuation operating portions 330 generally has an octagon.

In this case, the bottom of the actuation operating portions 330 is disposed over the bottom surface 110 of the base 100. It is however preferred that the bottom of the actuation operating portions 330 do not bring into contact with the bottom surface 110 of the base 100 like the ring 500, but be spaced apart from the bottom surface 110 at a predetermined intervals for a smooth sliding operation. Furthermore, the plurality of four or more moving contact points 420, coupled to the circuit board 400 of the key input means and flexible circuit boards 430 at the center, is formed outside the actuation operating portions 330.

The Y-axis sliding portions 320 and the bottom surface of the Y-axis moving stage 300 are formed to have a form ' 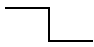 ' when viewed from the side. That is, the Y-axis moving stage 300 is coupled to the Y-axis moving guides 230 within the space 210 of the X-axis moving stage 200 in such a way as to be laid on the Y-axis moving guides 230 in the form of the form ' 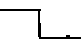 '. Accordingly, the Y-axis moving stage 300 slides on the Y-axis moving guides 230 in the Y-axis direction while maintaining a thin thickness.

Meanwhile, in the present embodiment, it is preferred that the stationary contact points 132 and the moving contact points 420 be made of a metal material of a dome type so that the Y-axis moving stage 300 can return to its original position after the Y-axis moving stage 300 slides in response to the operation of a keypad for inputting a signal.

The stationary contact points 132 and the moving contact points 420 may be formed of a pressure sensor (e.g., a piezoelectric element) in addition to the metal material of a dome type. In this case, additional resilient restoration means for restoring the Y-axis moving stage 300 to its original position is required.

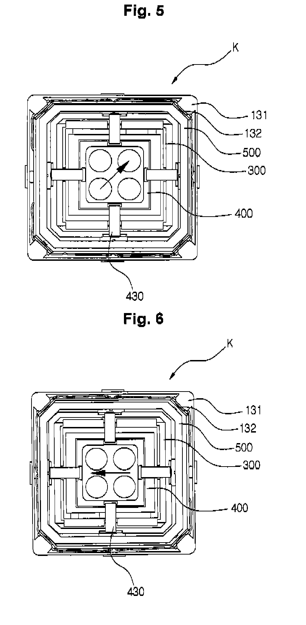

FIGS. 4 to 6 show the operating states of the Y-axis moving stage according to the present embodiment. FIGS. 5 and 6 are plan views showing states in which the Y-axis moving stage 300 has moved in the upper right direction and in the left direction, respectively, from the state of FIG. 4.

FIG. 5 is a diagram showing a state in which the Y-axis moving stage 300 has moved in the upper right direction from the state of FIG. 2. This drawing shows the state in which the stationary contact points 132 of the base 100 are pressed and also shows a state L in which the stationary contact points 132 have moved to the left bottom as much as the movement of the upper right direction.

Furthermore, FIG. 6 is a diagram showing a state in which the Y-axis moving stage 300 has moved in the left direction from the state of FIG. 2. This drawing shows a state in which the moving contact points 420 of the actuation operating portions 330 of the Y-axis moving stages 300 are pressed and also shows a state L in which the moving contact points 420 have moved to the right side as much as the movement of the right direction.

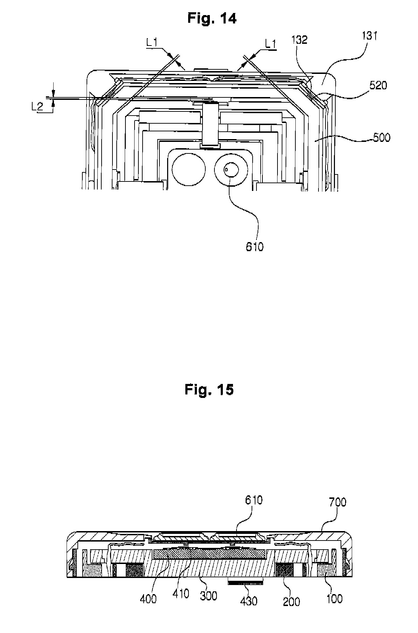

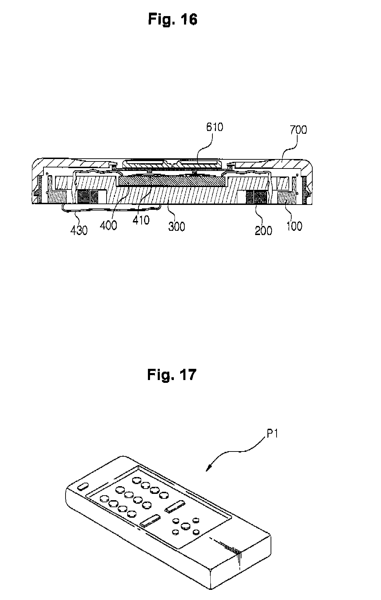

Meanwhile, the multi-directional slide input device K of the present embodiment, as shown in FIGS. 15 and 16, has a structure in which the base 100, and the X-axis moving stage 200 and the Y-axis moving stages 300 are coupled together to form ' 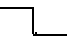 '. Accordingly, the three kinds of slide structures (i.e., the base and the X-axis and Y-axis moving stages) can be placed on the same plane without a difference in the vertical phase displacement, thereby being capable of minimizing the thickness of a terminal.

Thus, the multi-directional slide input device of the present embodiment can solve the stack problem of a conventional slide apparatus having a triple structure. Accordingly, the multi-directional slide input device of the present embodiment can prevent a minute tilting phenomenon occurring when a sliding operation is performed in a stack structure and thus contribute to the improvement of durability of the terminal P.

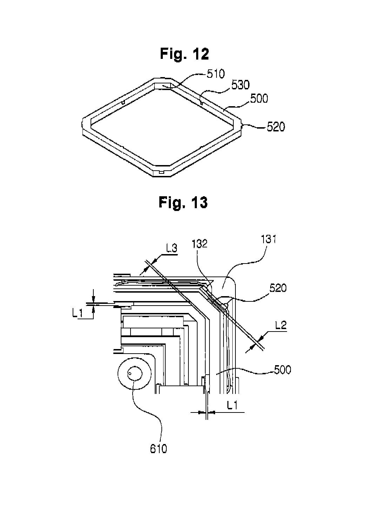

Meanwhile, the multi-directional slide input device of the present embodiment can include the ring 500. As shown in FIGS. 2 and 13, the ring 500 is seated on the operation surface 110 of the base 100 and configured to have an octagon so that the stationary contact points 132 of the base 100 and the moving contact points 420 of the actuation operating portions 330 of the Y-axis moving stages 300 are prevented from being operated at the same time when a sliding operation using the keypad 600 is performed.

In this case, the chamfer portions 510 are formed at the corners of the ring 500 so that they correspond to the respective contact point-fixing pieces 131 of the base 100, so that the ring 50 generally has an octagon. Inside protrusions 530 having the same number as the moving contact points 420 are formed on the inside of the ring 500 so that they pressurize the moving contact points 420. Further, outside protrusions 520 having the same number as the stationary contact points 132 are formed on the outside of the chamfer portions 510 so that they pressurize the stationary contact points 132.

Meanwhile, the actuation operating portions 330 and the ring 500 of an octagon, supported in the driving portions 340 of the Y-axis moving stage 300, are configured so that the stationary contact points 132 of the base 100 and the moving contact points 420 of the Y-axis moving stages 300 are independently touched and separated in a specific direction when a user performs a slide operation by operating the keypad 600 in the corresponding direction.

For example, in the case in which a slide operation is performed diagonally, when the outsides of the corners in the diagonal direction, from among the eight faces of the actuation operating portions 330, and the insides of the corners of the ring 500 of the corresponding direction are pressed (refer to L2 of FIG. 13), the external faces on the upper, lower, left, and right sides, from among the eight faces of the actuation operating portions 330, are configured to have a dual operation prevention structure (FIG. 14) so that the internal faces of the ring 500 on the upper, lower, left, and right sides are not pressed (L1). In other words, force generated when a user presses a key 610 and transferred to the protrusions of the keypad 600 pressurizes a keypad contact point 410, thereby transferring a signal externally (FIG. 15). Furthermore, in case where sliding is performed after a slide using the key 610 is performed or sliding is performed without pressing the key 610, the protrusion 520 of the ring 500 is pressed against the walls of one side of the actuation operating portions 330, thereby pressing the moving contact points 420 (FIG. 16).

That is, upon sliding in the upper, lower, left, and right directions, when the external faces in the upper and lower and left and right directions, from among the eight faces of the actuation operating portions 330, and the internal faces on the upper, lower, left, and right sides of the ring 500 in the corresponding direction are pressed (refer to L2 of FIG. 14), the external faces in the diagonal direction, from among the eight faces of the ring 500, are not pressed against the internal faces of the wall 130 in the diagonal direction of the base 100 (refer to L1 of FIG. 13). Accordingly, the stationary contact points 132 are not pressed in the corresponding diagonal direction (L1), but only the moving contact points 420 are pressed in the operating direction (L2), thereby preventing a dual operation prevention portion. (FIG. 13 is a diagram when the keypad is operated in the upper left direction, and FIG. 14 is a diagram when the keypad is upwardly operated).

Accordingly, when the keypad 600 is operated in the diagonal direction, the moving contact points 420 are not pressed (refer to L1 of FIG. 14), but only the stationary contact points 132 are pressed (L2) by means of the dual operation prevention portion. When the keypad 600 is operated in the upper, lower, left, and right directions, the stationary contact points 132 are not pressed (refer to L1 of FIG. 15), but only the moving contact points 420 are pressed (L2) by means of the dual operation prevention portion.

In particular, in case where each of the contact points 132 and 420 is formed of the metal dome having the same operating force, a resilient restoration function can be expected. Accordingly, there is an advantage in that when the metal domes in a corresponding operating direction are pressed, an actuation stroke can be implemented to a minimum extent (refer to FIG. 14).

This is because although an operation is performed in which direction, one dome in a direction in which the dome is pressed is vertically pressed for the operation direction, but two domes on both sides of the pressed dome have to be pressed using force greater than actual force because the force is dispersed owing to an inclined angle. (For example, with a reduction in the value of θ1 in FIG. 14, stronger force is required in order to pressurize the domes on both sides. The value of θ1 in FIG. 14 is 135° and an inside angle of each of the actuation operating portion and the ring is 135°).

Furthermore, the number of metal domes on both sides is two and thus the metal domes are pressed with twice or more force. One of the two domes on the weaker side (i.e., a dome in the operating direction) is always first pressed. (In the embodiment of the present invention, the metal dome contact points have been described as an example, which is shown in FIGS. 13 and 14).

A sliding stroke necessary for an operation can become very short by means of the dual operation prevention structure and the metal domes, and a portable terminal can also be reduced in size. For reference, a common metal dome has an actuation stroke of about 0.06 mm. Accordingly, the metal domes of the present invention can greatly reduce a stroke, and they are useful to transfer a feeling of pressing to a user.

The multi-directional slide input device of the present embodiment can solve a problem in that contact points other than a target direction are pressed when a sliding operation is performed in a specific direction because all sliding actuation contact points are disposed within the same radius outside operation keys in the case of a conventional slide apparatus.

That is, in the portable terminal P, the accuracy of input is very important in an environment in which characters, numerals, and various functions are performed in addition to a call function. Accordingly, in the multi-directional slide input device of the present embodiment, in order to solve the above-described problem, the contact points 132 for diagonal signals are disposed in the base 100 on the outside of the keypad, and the contact points for upper, lower, left, and right signals are disposed in the actuation operating portions 330, thereby greatly improving the dual touch and not-touch phenomenon. Accordingly, the multi-directional slide input device of the present embodiment can be operated stably and accurately even in a plurality of slide keypads.

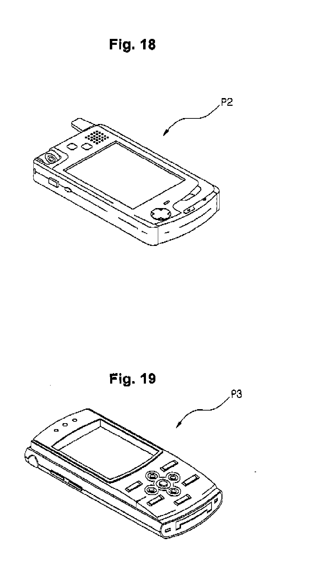

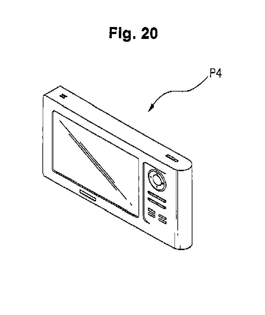

FIGS. 17 to 20 show examples in which the multi-directional slide input device of the present embodiment is applied.

As shown, a terminal P1 shows an example of the multi-directional slide input device K using four keys, and a terminal P2 shows an example of the multi-directional slide input device K using 10 keys on each of both sides. Terminals P3 and P4 show examples of a mobile phone and a PMP, each using one key, respectively.

### [Industrial Applicability]

The multi-directional slide input device according to the present invention has the following advantages.

First, couplings for the slides of the base, and the X-axis moving stage and the Y-axis moving stages are placed on the same plane so that there is not different in the vertical phase displacement. The stationary contact points of the base and the moving contact points of the actuation operating portions can be independently operated by the internal structure of an octagonal base and the structures of the actuation operating portions and the ring having an angle and length of a specific condition,. Accordingly, the multi-directional slide input device of the present invention complies with a consumer's purchase propensity because a sliding stroke can be minimized and a slide input device can also be made slim.

Second, since the stationary contact points and the moving contact points of four or more directions are independently operated, the accuracy of an input signal, required by a user, rises.

Third, keys can slide very lightly and smoothly without abnormality, tilting, and distortion in a rotating direction when they slide in a target direction, irrespective of the number of keys, by solving the problem that the existing slide input device is not suitable to slide two or more keys. Accordingly, mechanical reliability is increased and improved durability can be expected.

Fourth, a keypad equipped with at least one button for executing several electrical operations in order to make further slim the entire thickness and size and to simply perform characters, numerals, and various functions can slide in four or more directions within the base on the basis of its center.

### [Sequence List Text]

Portable terminal, multi-direction, input device, stationary contact point, moving contact point

## Claims

1. A portable terminal equipped with key input means for operating characters, numerals, and various functions, the portable terminal comprising:
a base mounted on the terminal and configured to comprise a rectangular operation surface, wherein a wall is formed along a frame of the operation surface and four or more stationary contact points are formed on an inside of the wall;
an X-axis moving stage seated on the operation surface and configured to have X-axis sliding portions protruded on upper and lower sides of the wall so that the X-axis moving stage moves in a horizontal direction and to have Y-axis moving guides protruded on an inside of the wall on left and right sides of the wall;
Y-axis moving stages, each configured to have a landing surface on which at least one key input means is seated, Y-axis sliding portions coupled with the respective Y-axis moving guides and formed on walls formed along a frame of the landing surface so that the Y-axis moving stage vertically moves within a space, and actuation operating portions spaced apart one another on outsides of the walls, wherein the actuation operating portions having a plurality of actuation contact points coupled to the key input means; and
a circuit board mounted on the landing surface of the Y-axis moving stage and configured to comprise keypad contact points.

2. The multi-directional slide input device according to claim 1, wherein:
the base comprises four or more contact point-fixing pieces formed on the inside of the wall so that the stationary contact points are placed in the contact point-fixing pieces, and
the base generally has an octagon.

3. The multi-directional slide input device according to claim 1, further comprising driving portions formed on the walls of the Y-axis moving stage and coupled with the actuation operating portions.

4. The multi-directional slide input device according to claim 3, further comprising driving portion slots formed in the wall of the X-axis moving stage and configured to have the respective driving portions inserted therein so that an operation is performed without friction.

5. The multi-directional slide input device according to claim 1, wherein a wiring exit of key input means is formed in the Y-axis moving stage.

6. The multi-directional slide input device according to claim 1, wherein the actuation operating portions are spaced apart from the operation surface of the base at a predetermined height and configured to slide without friction.

7. The multi-directional elide input device according to claim 1, wherein moving contact point grooves for receiving the moving contact points are formed on outsides of the actuation operating portions.

8. The multi-directional slide input device according to claim 1, wherein the actuation operating portions have chamfer portions formed at respective corners, thus generally forming an octagon.

9. The multi-directional slide input device according to claim 1, wherein the stationary contact points are pressed and operated by the respective actuation operating portions when a sliding operation using a keypad is performed.

10. The multi-directional slide input device according to claim 1, wherein the X-axis sliding portions are formed on an outside top of the walls, and the Y-axis moving guides are formed on an inside bottom of the walls, whereby the X-axis sliding portions and the Y-axia moving guides are coupled together to form ' 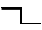 '.

11. The multi-directional slide input device according to claim 1, wherein the X-axis sliding portions are formed on an outside top of the walls, and the landing surface is formed on an inside bottom of the walls, whereby the Y-axis sliding portion and the landing surface are coupled together to form ' 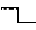 '.

12. The multi-directional slide input device according to claim 1, wherein the stationary contact points and the moving contact points are made of a metal material of a dome form.

13. The multi-directional slide input device according to claim 1, wherein the stationary contact points and the moving contact points are formed of a plate spring of a metal material.

14. The multi-directional slide input device according to claim 1, wherein the stationary contact points and the moving contact points are formed of a pressure sensor.

15. The multi-directional slide input device according to claim 1, further comprising a ring seated on a bottom surface of the base and configured to slide when a sliding operation using a keypad is performed so that the stationary contact points of the base and the moving contact points of the Y-axis moving stages are not simultaneously operated.

16. The multi-directional slide input device according to claim 15, wherein when the sliding operation using the keypad is performed, the actuation operating portions bring into contact with the ring, and the ring brings into contact with the stationary contact points of the base.

17. The multi-directional slide input device according to claim 15, wherein the actuation operating portions have chamfer portions formed at respective corners, thus generally forming an octagon, and the actuation operating portions are slided on an inside of the ring.

18. The multi-directional slide input device according to claim 15, wherein the ring has chamfer portions formed at respective corners, thus forming an octagon.

19. The multi-directional slide input device according to claim 15, wherein:
inside protrusions, having a number corresponding to a number of the moving contact points, are formed on the inside of the ring and configured to pressurize the moving contact points, and
outside protrusions, having a number corresponding to a number of the stationary contact points, are formed on an outside of the respective chamfer portions and configured to pressurize the stationary contact points.
